(19) Europäisches Patentamt
European Patent Office
Office européen des brevets

(11) EP 0 567 819 B1

(12) **EUROPÄISCHE PATENTSCHRIFT**

(45) Veröffentlichungstag und Bekanntmachung des Hinweises auf die Patenterteilung:
**04.09.1996 Patentblatt 1996/36**

(51) Int. Cl.$^6$: **C08F 265/06**

(21) Anmeldenummer: **93105832.5**

(22) Anmeldetag: **08.04.1993**

(54) **Wässrige Polymerisatdispersion**

Aqueous polymer dispersion

Dispersion aqueuse de polymères

(84) Benannte Vertragsstaaten:
**BE DE ES FR GB IT NL SE**

(30) Priorität: **29.04.1992 DE 4213969**

(43) Veröffentlichungstag der Anmeldung:
**03.11.1993 Patentblatt 1993/44**

(73) Patentinhaber: **BASF Aktiengesellschaft
67063 Ludwigshafen (DE)**

(72) Erfinder:
- **Aydin, Oral, Dr.
W-6800 Mannheim 1 (DE)**
- **Portugall, Michael, Dr.
W-6706 Wachenheim (DE)**
- **Neutzner, Josef, Dr.
W-6730 Neustadt (DE)**
- **Maechtle, Walter, Dr.
W-6700 Ludwigshafen (DE)**

(56) Entgegenhaltungen:
**EP-A- 0 129 699** **EP-A- 0 387 855**

EP 0 567 819 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Rank Xerox (UK) Business Services
2.13.4/3.4

## Beschreibung

Die vorliegende Erfindung betrifft eine wäßrige Polymerisatenddispersion, die eine Feststoffvolumenkonzentration von wenigstens 50 Vol.-% aufweist (Feststoffvolumen = Feststoffmasse dividiert durch Feststoffdichte), dadurch erhältlich, daß man wenigstens ein von Vinyl- und Vinylidenhalogeniden verschiedenes radikalisch polymerisierbares Monomeres unter Zusatz wenigstens einer wäßrigen Polymerisatausgangsdispersion I in einem Polymerisationsgefäß nach dem Verfahren der radikalischen wäßrigen Emulsionspolymerisation in Gegenwart von Dispergiermitteln und radikalischen Polymerisationsinitiatoren mit der Maßgabe polymerisiert, daß

A) die in der wenigstens einen zugesetzten wäßrigen Polymerisatausgangsdispersion I enthaltene Masse an Polymerisat, bezogen auf die Gesamtmasse, gebildet aus der Masse des wenigstens einen radikalisch polymerisierbaren Monomeren und der in Form der wäßrigen Polymerisatausgangsdispersion I zugesetzten Masse an Polymerisat, 1 bis 10, vorzugsweise 1 bis 5 % beträgt,

B) die wenigstens eine zugesetzte wäßrige Polymerisatausgangsdispersion I so wie eine durch Zusammengeben von n wäßrigen Polymerisatausgangsdispersionen II erhaltene wäßrige Polymerisatdispersion beschaffen ist, bei welcher das Zusammengeben mit der Maßgabe erfolgte, daß

a) n eine ganze Zahl $\geqq 2$ ist,

b) der gewichtsmittlere Teilchendurchmesser der in den jeweiligen wäßrigen Polymerisatausgangsdispersionen II in disperser Verteilung vorliegenden Ausgangspolymerisatteilchen für jede wäßrige Polymerisatausgangsdispersion II im Bereich > 0 bis 400 nm liegt,

c) der gewichtsmittlere Teilchendurchmesser der Ausgangspolymerisatteilchen wenigstens einer wäßrigen Polymerisatausgangsdispersion II im Bereich > 0 bis 100 nm liegt,

d) die wäßrigen Polymerisatausgangsdispersionen II eine monomodale Verteilung der Durchmesser der in ihnen enthaltenen Ausgangspolymerisatteilchen aufweisen, die so beschaffen ist, daß wenn $d_x$ den Durchmesser definiert, unterhalb dessen der Teilchendurchmesser von X Gew.-% aller in der jeweiligen wäßrigen Ausgangsdispersion II vorhandenen Ausgangspolymerisatteilchen liegt, der Quotient $(d_{90}-d_{10})/d_{50}$ einen Wert von 0,1 bis 0,6 annimmt,

e) zwischen dem durch Division der in der i-ten wäßrigen Polymerisatausgangsdispersion II enthaltenen Masse des i-ten Ausgangspolymerisats II mit der Massendichte des i-ten Ausgangspolymerisats II erhältlichen Volumen $V_i$ und dem in entsprechender Weise bestimmten Volumen $V_j$, unter der Voraussetzung, daß sowohl der gewichtsmittlere Teilchendurchmesser der in der i-ten wäßrigen Polymerisatausgangsdispersion II enthaltenen Ausgangspolymerisatteilchen ($\bar{d}_{w,i}$), als auch $\bar{d}_{w,j}$ oberhalb von 100 nm liegt, die Beziehung 1

$$V_i = V_j \cdot k \cdot \left(\frac{\bar{d}_{w,i}}{\bar{d}_{w,j}}\right)^2 \qquad (1),$$

mit k = 1/1,5 bis 1,5 , erfüllt ist,

f) zwischen dem über die Gesamtmenge aller wäßrigen Polymerisatausgangsdispersionen II, die einen gewichtsmittleren Teilchendurchmesser der in ihnen enthaltenen Ausgangspolymerisatteilchen im Bereich von > 0 bis $\leqq$ 100 nm aufweisen, ermittelten gewichtsmittleren Teilchendurchmesser der in dieser Gesamtmenge enthaltenen Ausgangspolymerisatteilchen ($\bar{d}_{w,\leqq 100}$) und dem gewichtsmittleren Teilchendurchmesser der in der i-ten wäßrigen Polymerisatausgangsdispersion II enthaltenen Ausgangspolymerisatteilchen ($\bar{d}_{w,i}$), unter der Voraussetzung, daß $\bar{d}_{w,i}$ > 100 nm ist, die Beziehung 2

$$V_i = V_{\leqq 100} \cdot k' \left(\frac{\bar{d}_{w,i}}{\bar{d}_{w,\leqq 100}}\right)^2 \qquad (2),$$

mit k' = 0,5 bis 5,

$V_i$ = Masse des in der i-ten wäßrigen Polymerisatausgangsdispersion II enthaltenen Ausgangspolymerisats dividiert durch dessen Massendichte,

$V_{\leqq 100}$ = Masse des in der Gesamtmenge aller wäßrigen Polymerisatausgangsdispersionen II, die einen gewichtsmittleren Teilchendurchmesser der in ihnen enthaltenen Ausgangspolymerisatteilchen im Bereich von > 0 bis ≦ 100 nm aufweisen, enthaltenen Ausgangspolymerisats dividiert durch dessen Massendichte,

erfüllt ist,

g) $V_{\leqq 100}$, bezogen auf die Summe aller $V_i$, 0,3 bis 10 Vol.-% beträgt und

h) die Differenz zwischen dem kleinsten und dem größten gewichtsmittleren Teilchendurchmesser $\overline{d}_{w,i}$ der in der wäßrigen Polymerisatausgangsdispersion I enthaltenen wäßrigen Polymerisatausgangsdispersionen II wenigstens 150 nm beträgt,

C) die Gesamtmenge der wenigstens einen zuzusetzenden wäßrigen Polymerisatausgangsdispersion I vor Beginn der radikalischen wäßrigen Emulsionspolymerisation ins Polymerisationsgefäß vorgelegt wird und

D) die radikalische wäßrige Emulsionspolymerisation des wenigstens einen radikalisch polymerisierbaren Monomeren nach dem Zulaufverfahren mit der Maßgabe erfolgt, daß

- ab Beginn der radikalischen wäßrigen Emulsionspolymerisation der Zulauf des wenigstens einen radikalisch polymerisierbaren Monomeren ins Polymerisationsgefäß so erfolgt, daß zu jedem Zeitpunkt des Zulaufs der Polymerisationsumsatz der bereits zuvor dem Polymerisationsgefäß insgesamt zugeführten Monomeren wenigstens 80 mol.-% beträgt und
- die zu jedem Zeitpunkt ab Beginn der radikalischen wäßrigen Emulsionspolymerisation im Polymerisationsgefäß enthaltene Menge an Dispergiermittel, bezogen auf die Summe der dem Polymerisationsgefäß bereits zugeführten Massen an Ausgangspolymerisat I und zu polymerisierenden Monomeren, 0,5 bis 5 Gew.-% beträgt.

Weiterhin betrifft die vorliegende Erfindung das Verfahren zur Herstellung solcher wäßriger Polymerisatenddispersionen sowie ihre Verwendung als Bindemittel und als Massen zur Herstellung von Beschichtungen und Verklebungen.

Wäßrige Polymerisatdispersionen sind Systeme, die als disperse Phase in einem wäßrigen Dispersionsmedium dispers verteilte Polymerisatteilchen enthalten.

Ebenso wie Polymerisatlösungen beim Verdampfen des Lösungsmittels, weisen wäßrige Polymerisatdispersionen beim Verdampfen des wäßrigen Dispersionsmediums die Eigenschaft auf, Polymerisatfilme zu bilden, weshalb wäßrige Polymerisatdispersionen in vielfacher Weise als Bindemittel, z.B. für Anstrichfarben oder für Massen zum Beschichten von Leder, Anwendung finden.

Wäßrige Polymerisatdispersionen mit hohem Polymerisatanteil sind insofern von besonderem Vorteil, als einerseits ihr relativ geringerer Anteil an wäßrigem Dispersionsmedium den Aufwand für das Verdampfen desselben, z.B. zur Filmbildung oder zur Herstellung von Polymerpulvern, reduziert und andererseits der Wertstoff Polymerisat in Anwendung einer relativ geringeren Menge wäßriger Phase als Trägermedium gelagert und transportiert werden kann.

Von Nachteil ist jedoch, daß mit zunehmender Volumenkonzentration (US-A 4,130,523) des Polymerisats die Herstellung wäßriger Polymerisatdispersionen problembehaftet ist. So nimmt einerseits der Fließwiderstand (die Viskosität) zu und erschwert sowohl die Abführung der Reaktionswärme als auch die Verarbeitung der wäßrigen Dispersion und andererseits wächst die Neigung der dispergierten Polymerisatteilchen sich aus Gründen der thermodynamischen Stabilität zusammenzulagern. Die dabei entstehenden Ausflockungen [a) Mikroflockungen oder Stippen; sie können durch herkömmliche Filtration in der Regel nicht abgetrennt werden; b) Makroflockungen oder Koagulat; ist normalerweise durch übliche Filtration abtrennbar;] führen insbesondere zu Störungen in den Verfilmungen der wäßrigen Polymerisatdispersionen und sind daher in der Regel unerwünscht.

Nach Untersuchungen über den Fließwiderstand wäßriger Polymerisatdispersionen weisen solche mit einer breiten Größenverteilung (polydispers) der dispergierten Polymerisatteilchen bei gleichem Feststoffgehalt in der Regel einen geringeren Fließwiderstand auf als solche mit einer engen Größenverteilung (im Grenzfall monodispers). Ferner zeigen grobteilige wäßrige Polymerisatdispersionen unter der Prämisse gleichen Feststoffgehalts einen geringeren Fließwiderstand als feinteilige wäßrige Polymerisatdispersionen.

Aus der EP-A 129 699 ist ein Verfahren zur Herstellung einer wäßrigen Polymerisatdispersion bekannt, bei dem man in einem Polymerisationsgefäß nach dem Verfahren der radikalischen wäßrigen Emulsionspolymerisation ungesättigte Monomere in an sich bekannter Weise polymerisiert und dabei eine wäßrige Dispersion eines Ausgangspolymerisats zusetzt, wobei der Zusatz der wäßrigen Dispersion des Ausgangspolymerisats abgeschlossen sein muß, bevor 40 Gew.-% der insgesamt zu polymerisierenden Monomeren einpolymerisiert sind sowie frühestens dann erfolgen darf, wenn die mittlere Teilchengröße des bei der Polymerisation der Monomeren entstehenden Emulsionspolymerisats den zweifachen Wert der mittleren Teilchengröße der wäßrigen Dispersion des Ausgangspolymerisats aufweist. Vorzugsweise wird dabei die wäßrige Dispersion des Ausgangspolymerisats nicht über einen längeren Zeitraum, sondern auf einmal zugegeben.

Nachteilig an den so erhältlichen wäßrigen Polymerisatdispersionen ist, daß ihr Fließwiderstand oberhalb einer Feststoffvolumenkonzentration von 50 Vol.-% nicht voll zu befriedigen vermag und gemäß den Ausführungsbeispielen die Feststoffvolumenkonzentration auf Werte unter 65 Vol.-% beschränkt ist.

Die US-A 4,130,523 betrifft ein Verfahren zur Herstellung wäßriger Polymerisatdispersionen, bei dem während des Polymerisationsprozesses laufend bereits gebildete wäßrige Polymerisatdispersion aus der Reaktionszone entfernt, gelagert und später der Reaktionszone als eine Art Ausgangspolymerisatdispersion wieder zugeführt wird. Nachteilig an diesem Verfahren ist, daß es für eine großtechnische Realisierung ungeeignet ist.

Die US-A 3,424,706 bezieht sich auf ein Verfahren zur Herstellung wäßriger Polymerisatdisperionen, deren Polymerisate wenigstens 70 bis 97 Gew.-% Vinylidenchlorid einpolymerisiert enthalten, bei dem die Polymerisation der Monomeren unter Zusatz einer wäßrigen Dispersion eines Ausgangspolymerisats erfolgt. Unter anderem enthält die US-A 3,424,706 den Hinweis, die zu polymerisierenden Monomeren und die wäßrige Dispersion des Ausgangspolymerisats miteinander zu vermischen und dieses Gemisch der einen Teil des Polymerisationsansatzes umfassenden Vorlage zuzuführen.

Nachteilig an diesem Verfahren ist, daß es auf Monomerengemische beschränkt ist, die hauptsächlich Vinylidenchlorid enthalten. Darüber hinaus vermag gemäß den Ausfuhrungsbeispielen auch bei den nach diesem Verfahren erhältlichen wäßrigen Polymerisatdispersionen sowohl der Fließwiderstand oberhalb einer Feststoffvolumenkonzentration von 50 Vol.-%, als auch die in noch befriedigend fließfähigem Zustand erreichbare Obergrenze der Feststoffvolumenkonzentration nicht zu befriedigen.

Ziel der vorliegenden Erfindung war daher, wäßrige Polymerisatdispersionen zur Verfügung zu stellen, die in einfacher, großtechnisch geeigneter, reproduzierbarer und nicht auf spezielle Monomere beschränkter Weise bei erhöhter Feststoffvolumenkonzentration mit reduziertem Fließwiderstand sowie reduziertem Gehalt an Ausflockungen erhältlich sind.

Demgemäß wurden die eingangs definierten wäßrigen Polymerisatenddispersionen gefunden.

Bemerkenswerterweise ist der erfindungsgemäße Gegenstand nicht auf die radikalische wäßrige Emulsionspolymerisation von hauptsächlich oder ausschließlich aus Vinyl- und/oder Vinylidenhalogeniden zusammengesetzten Monomerengemischen beschränkt, ist doch allgemein bekannt, daß die Entwicklung der dispersen Phase im Fall von Vinyl- und/oder Vinylidenhalogeniden verschiedenen Monomeren ein wesentlich komplexeres Erscheinigungsbild aufweist.

Für das erfindungsgemäße Verfahren kommen daher als radikalisch polymerisierbare Monomere unter anderen insbesondere monoethylenisch ungesättigte Monomere wie Olefine, z.B. Ethylen, vinylaromatische Monomere wie Styrol, α-Methylstyrol, o-Chlorstyrol oder Vinyltoluole, Ester aus Vinylalkohol und 1 bis 18 C-Atome aufweisenden Monocarbonsäuren wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methyacrylsäuremethyl-, -ethyl, -n-butyl, -iso-butyl und -2-ethylhexylester, Maleinsäuredimethylester oder Maleinsäure-n-butylester, Nitrile α,β-monoethylenisch ungesättigter Carbonsauren wie Acrylnitril sowie $C_{4-8}$-konjugierte Diene wie 1,3-Butadien und Isopren in Betracht. Die genannten Monomeren bilden in der Regel die Hauptmonomeren, die, bezogen auf die Gesamtmenge der nach dem Verfahren der radikalischen wäßrigen Emulsionspolymerisation zu polymerisierenden Monomeren, normalerweise einen Anteil von mehr als 50 Gew.-% auf sich vereinen. Monomere, die für sich polymerisiert üblicherweise Homopolymerisate ergeben, die eine erhöhte Wasserlöslichkeit aufweisen, werden im Normalfall lediglich als modifizierende Monomere in Mengen, bezogen auf die Gesamtmenge der zu polymerisierenden Monomeren, von weniger als 50 Gew.-%, in der Regel 0,5 bis 20, vorzugsweise 1 bis 10 Gew.-%, miteinpolymerisiert.

Beispiele für derartige Monomere sind 3 bis 6 C-Atome aufweisende α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon. Monomere, die üblicherweise die innere Festigkeit der Verfilmungen der wäßrigen Polymerisatenddispersion erhöhen, werden in der Regel ebenfalls nur in untergeordneten Mengen, meist 0,5 bis 10 Gew.-% bezogen auf die Gesamtmenge der zu polymerisierenden Monomeren, miteinpolymerisiert. Normalerweise weisen derartige Monomere eine Epoxy-, Hydroxy-, N-Methylol-, Carbonyl- oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren sowie deren Ester mit 1 bis 4 C-Atome aufweisenden Alkoholen, unter denen das N-Methylolacrylamid und das N-Methylolmethacrylamid ganz besonders bevorzugt sind, zwei Vinylreste aufweisende Monomere, zwei Vinylidenreste aufweisende Monomere sowie zwei Alkenylreste aufweisende Monomere. Besonders geeignet sind dabei die Di-Ester zweiwertiger Alkohole mit α,β-monoethylenisch ungesättigten Monocarbonsäuren unter denen wiederum die Acryl- und Methacrylsäure vorzugsweise eingesetzt werden. Beispiele für derartige zwei nicht konjugierte ethylenisch ungesättigte Doppelbindungen aufweisende Monomere sind Alkylenglycoldiacrylate- und dimethacrylate wie Ethylenglycoldiacrylat, 1,3-Butylenglycoldiacrylat, 1,4-Butylenglycoldiacrylat sowie Propylenglycoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von besonderer Beeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen wie Diacetonacrylamid und Acetylacetoxyethylacrylat bzw. -methacrylat. Neben ungesättigte Doppelbindungen aufweisenden Monomeren können in untergeordneten Mengen, üblicherweise 0,01 bis 2 Gew.-% bezogen auf die zu polymerisierenden Monomeren, das Molekulargewicht regelnde Substanzen wie tert.-Dodecylmercaptan sowie 3-Mercaptopropyltrimethoxysilan miteinpolymerisiert werden. Vorzugsweise werden derartige Substanzen im Gemisch mit den zu polymerisierenden Monomeren der Polymerisationszone zugegeben.

Als Dispergiermittel kommen sowohl die zur Durchführung von radikalischen wäßrigen Emulsionspolymerisationen üblicherweise eingesetzten Schutzkolloide als auch Emulgatoren in Betracht. Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Selbstverständlich können auch Gemische aus Emulgatoren und/oder Schutzkolloiden verwendet werden. Vorzugsweise werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nicht-ionischen Emulgatoren verträglich. Desgleichen gilt auch für kationische Emulgatoren, während anionische und kationische Emulgatoren meistens miteinander unverträglich sind. Gebräuchliche Emulgatoren sind z.B. ethoxylierte Mono-, Di- und Tri-Alkylphenole (EO-Grad: 3 bis 50, Alkylrest: $C_4$ bis $C_9$), ethoxylierte Fettalkohole (EO-Grad: 3 bis 50, Alkylrest: $C_8$ bis $C_{36}$), sowie Alkali- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_9$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Georg-Thieme Verlag, Stuttgart, 1961, Seiten 192 bis 208.

Als besonders geeignete grenzflächenaktive Substanzen haben sich Verbindungen der allgemeinen Formel I

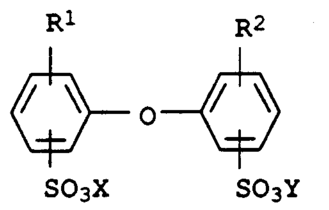

(I),

worin $R^1$ und $R^2$ Wasserstoff oder $C_4$- bis $C_{24}$-Alkyl bedeuten und nicht gleichzeitig Wasserstoff sind, und X und Y Alkalimetallionen und/oder Ammoniumionen sein können, erwiesen. In der Formel I bedeuten $R^1$ und $R^2$ bevorzugt lineare oder verzweigte Alkylreste mit 6 bis 18 C-Atomen oder Wasserstoff, und insbesondere mit 6,12 und 16 C-Atomen, wobei $R^1$ und $R^2$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen I in denen X und Y Natrium, $R^1$ ein verzweigter Alkylrest mit 12 C-Atomen und $R^2$ Wasserstoff oder $R^1$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Vorzugsweise werden die Verbindungen I im erfindungsgemäßen Verfahren für sich und besonders bevorzugt im Gemisch mit ethoxylierten Fettalkoholen (EO-Grad: 3 bis 50, Alkylrest: $C_8$- bis $C_{36}$) als Dispergiermittel eingesetzt. Die Verbindungen I sind allgemein bekannt, z.B. aus der US-A 4,269,749, und im Handel erhältlich. Mit Vorteil enthält die erfindungsgemäße wäßrige Polymerisatenddispersion, bezogen auf die Masse des Endpolymerisats, 1 bis 3 Gew.-% an grenzflächenaktiven Substanzen.

Als radikalische Polymerisationsinitiatoren kommen alle diejenigen in Betracht, die in der Lage sind, eine radikalische wäßrige Emulsionspolymerisation auszulösen. Es kann sich dabei sowohl um Peroxide, z.B. Alkalimetallperoxidisulfate, als auch um Azoverbindungen handeln. Vorzugsweise werden kombinierte Systeme, die aus wenigstens einem organischen Reduktionsmittel und wenigstens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure, und ganz besonders bevorzugt kombinierte Systeme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/Wasserstoffperoxid, eingesetzt, wobei anstelle von Ascorbinsäure auch häufig das Natriummetallsalz der Hydroxymethansulfinsäure, Natriumsulfit, Natriumhydrogensulfit oder Natriummetalldisulfit und anstelle von Wasserstoffperoxid tert. Butylhydroperoxid oder Alkalimetallperoxidisulfate und/oder Ammoniumperoxidisulfat angewendet werden. Anstelle eines wasserlöslichen Eisen (II)-salzes wird häufig eine Kombination aus wasserlöslichen Fe/V-Salzen benutzt. Vorzugsweise beträgt die Menge der eingesetzten radikalischen Initiatorsysteme, bezogen auf die Gesamtmenge der zu polymerisierenden Monomeren, 0,1 bis 2 Gew.-%.

Die Art und Weise, in der das radikalische Initiatorsystem im Verlauf der erfindungsgemäßen radikalischen wäßrigen Emulsionspolymerisation dem Polymerisationsgefäß zugegeben wird, ist hinsichtlich des Erfolgs des erfindungsgemäßen Verfahrens eher von untergeordneter Bedeutung. Das Initiatorsystem kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise zugesetzt werden. Im einzelnen hängt dies in an sich dem Durchschnittsfachmann bekannter Weise sowohl von der chemischen Natur des Initiatorsystems als auch von der Polymerisationstemperatur ab.

Polymerisationsdruck und Polymerisationstemperatur sind gleichfalls von eher untergeordneter Bedeutung. Im allgemeinen arbeitet man bei Temperaturen zwischen Raumtemperatur und 100°C, vorzugsweise bei Temperaturen von 50 bis 95°C. Die Anwendung von erhöhtem oder vermindertem Druck ist möglich, so daß die Polymerisationstemperatur auch 100°C überschreiten und bis zu 130°C betragen kann. Vorzugsweise werden leichtflüchtige Monomere wie Ethylen, Butadien oder Vinylchlorid unter erhöhtem Druck polymerisiert. Zur pH-Wert Regulierung des Polymerisationsmediums kann während der erfindungsgemäßen radikalischen wäßrigen Emulsionspolymerisation beispielsweise Ammoniak zugegeben werden.

Die für die erfindungsgemäße radikalische wäßrige Emulsionspolymerisation beispielhaft als geeignet genannten radikalisch polymerisierbaren Monomeren eignen sich nicht nur als Konstituenten des erfindungsgemäß zu polymerisierenden Monomerengemisches. Vielmehr eignen sie sich in gleicher Weise wie die für die erfindungsgemäße radikalische wäßrige Emulsionspolymerisation empfohlenen Polymerisationsinitiatoren, das Molekulargewicht regelnden Verbindungen und den pH-Wert regulierenden Mittel auch als Konstituenten der Ausgangspolymerisate I, II, bzw. der diese enthaltenden Polymerisatausgangsdispersionen, wobei die Monomeren-, Regler- und Initiatorenzusammensetzung zur Herstellung der wäßrigen Polymerisatausgangsdispersionen I, II mit derjenigen für das erfindungsgemäße Verfahren sowohl deckungsgleich als auch verschieden sein kann. Die ebenda gemachten Aussagen gelten im übertragenen Sinn auch für die zur Herstellung der wäßrigen Polymerisatausgangsdispersionen I, II einzusetzenden grenzflächenaktiven Substanzen.

Wäßrige Polymerisatausgangsdispersionen I sind in einfacher Weise dadurch erhältlich, daß man in definitionsgemäßer Weise n wäßrige Polymerisatausgangsdispersionen II, deren Teilchendurchmesserverteilungsfunktionen vorzugsweise im wesentlichen nicht überlappen, zusammengibt. Anwendungstechnisch bevorzugt liegt n im Bereich 2 bis 10, vorzugsweise im Bereich 2 bis 5. Die Herstellung wäßriger Polymerisatausgangsdispersionen II ist an sich bekannt. Entsprechende Lehren sind z. B. in Houben-Weyl, Methoden der organischen Chemie, Band E 20, Teil I, Makromolekulare Stoffe, Georg-Thieme Verlag, Stuttgart, 1987, Seiten 248 bis 268 zu finden. Bei einem vorzugsweise angewendeten Feststoffgehalt von 20 bis 40 Gew.-% und einem angestrebten gewichtsmittleren Teildurchmesser von $> 0$ bis $\leq$ 50 nm, sind die wäßrigen Polymerisatausgangsdispersionen II in besonders einfacher Weise z. B. dadurch erhältlich, daß man die wäßrige Phase, die Monomeren, die radikalischen Initiatoren (normalerweise 0,1 bis 5 Gew.-%, bezogen auf die Menge der zu polymerisierenden Ausgangsmonomeren) und Dispergiermittel (üblicherweise 10 bis 50 Gew.-%, bezogen auf die Menge der zu polymerisierenden Ausgangsmonomeren) bei niederer Temperatur miteinander vermischt und nach Vermischen auf die Polymerisationstemperatur erwärmt und polymerisiert (zunehmende Mengen an Dispergiermittel bedingen in der Regel einen abnehmenden gewichtsmittleren Teilchendurchmesser). Bei einer anderen Variante umfaßt die Vorlage im wesentlichen alle Komponenten, der Polymerisationsinitiator wird jedoch nach Erwärmen auf die Reaktionstemperatur unter Aufrechterhalten derselben kontinuierlich zugeführt. Hinsichtlich Polymerisationstemperatur und Druck gelten die bezüglich des erfindungsgemäßen Verfahrens gemachten Aussagen.

Ausgehend von solchermaßen erhältlichen relativ feinteiligen wäßrigen Polymerisatausgangsdispersionen II sind grobteilige wäßrige Polymerisatausgangsdispersionen II beispielsweise dadurch erhältlich, daß man in einem Polymerisationsgefäß eine feinteilige wäßrige Polymerisatausgangsdispersion II vorlegt, auf die Polymerisationstemperatur erwärmt und anschließend weitere Monomere, üblicherweise in wäßrigem Medium voremulgiert, und Polymerisationsinitiator unter Aufrechterhalten der Polymerisationstemperatur ins Polymerisationsgefäß zuführt. Die im Rahmen der wäßrigen Monomerenemulsion zugeführte Menge Emulgiermittel wird dabei so bemessen, daß die in der resultierenden grobteiligeren wäßrigen Polymerisatausgangsdispersion II enthaltene Dispergiermittelgesamtmenge, bezogen auf das resultierende grobteilige Ausgangspolymerisat II, 0,5 bis 5, vorzugsweise 0,5 bis 3 Gew.-% beträgt. Die zu erzielende Teilchenvergröberung wird im wesentlichen durch das Mengenverhältnis von in der Vorlage enthaltenen feinteiligen Ausgangspolymerisat-II-teilchen und zugeführten Monomeren bestimmt. Selbstverständlich können der Prozeß der Herstellung einer relativ feinteiligen wäßrigen Polymerisatausgangsdispersion II und der Prozeß der Vergröberung nahtlos ineinander übergehen. Die Angaben über gewichtsmittlere Polymerisatteilchendurchmesser sowie Quotienten $(d_{90}-d_{10})/d_{50}$ der wäßrigen Polymerisatausgangsdispersionen beziehen sich hier stets auf Bestimmungen mittels der analytischen Ultrazentrifuge (W. Mächtle, Makromolekulare Chemie, Bd. 185 (1984), S. 1025-1039). Die Bestimmungen der Polymerisatteilchengrößenverteilung der wäßrigen Polymerisatenddispersionen wurden mit der sogenannten Coupling-PSD-Technik in der analytischen Ultrazentrifuge bestimmt (vgl. W. Mächtle, Angewandte Makromolekulare Chemie 162 (1988) 35-42 (Nr. 2735)).

Bevorzugt werden erfindungsgemäß solche wäßrigen Polymerisatausgangsdispersionen I eingesetzt, die an wäßrigen Polymerisatausgangsdispersionen II mit einem $\overline{d}_{w,i} \leqq 100$ nm nur solche enthalten, deren $\overline{d}_{w,i}$ ausschließlich im Bereich von $\geqq 20$ nm von $\leqq 100$ nm, ganz besonders bevorzugt ausschließlich im Bereich von $\geqq 30$ bis $\leqq 60$ nm liegen. Ferner ist es vorteilhaft solche wäßrigen Polymerisatausgangsdispersionen I einzusetzen, die nur solche wäßrigen Polymerisatausgangsdispersionen II beinhalten, daß die Differenz zwischen $\overline{d}_{w,\leqq 100}$ und $\overline{d}_{w,i}$, wobei $\overline{d}_{w,i}$ hier der gewichtsmittlere Teilchendurchmesser derjenigen in der wäßrigen Polymerisatausgangsdispersion I enthaltenen wäßrigen Polymerisatausgangsdispersion II ist, dessen oberhalb von 100 nm liegender Wert am nächsten bei 100 nm liegt, wenigstens 60, vorzugsweise wenigstens 100 nm beträgt.

Darüber hinaus werden vorzugsweise solche wäßrigen Polymerisatausgangsdispersionen I verwendet, für die alle k-Werte im Bereich 0,9 bis 1,1 und alle k'-Werte im Bereich 0,75 bis 3, vorzugsweise im Bereich 0,9 bis 1,5 liegen. Ganz besonders vorteilhaft ist es, wenn alle Werte k bzw. k' für die wenigstens eine verwendete wäßrige Polymerisatausgangsdispersion I etwa 1 betragen.

Weiterhin beträgt $V_{\leqq 100}$ in der wenigstens einen zuzusetzenden wäßrigen Polymerisatausgangsdispersion I, bezogen auf die Summe aller in ihr enthaltenen $V_i$, mit Vorteil 0,5 bis 5 Vol.-%. Der Gehalt an Dispergiermittel in der wenigstens einem wäßrigen Polymerisatausgangsdispersion I beträgt normalerweise 0,5 bis 5 Gew.-%, bezogen auf die Menge des darin enthaltenen Ausgangspolymerisats I.

Definitionsgemäß sind die erfindungsgemäßen wäßrigen Polymerisatenddispersionen dadurch erhältlich, daß man die Gesamtmenge der wenigstens einen zuzusetzenden wäßrigen Polymerisatausgangsdispersion I vor Beginn der erfindungsgemäßen radikalischen wäßrigen Emulsionspolymerisation ins Polymerisationsgefäß vorlegt und die radikalische wäßrige Emulsionspolymerisation des wenigstens einen radikalisch zu polymerisierenden Monomeren nach dem Zulaufverfahren durchführt.

Werden Polymerisatenddispersionen mit besonders hoher Feststoffvolumenkonzentration angestrebt, ist es zweckmäßig die Monomeren dem Polymerisationsgefäß für sich zuzuführen. Ansonsten werden die radikalisch zu polymerisierenden Monomeren vorzugsweise in wäßriger Phase voremulgiert zugeführt, wobei die Menge des diesbezüglich verwendeten Emulgators, bezogen auf die Menge der emulgierten Monomeren, mit Vorteil 0,5 bis 3 Gew.-% beträgt.

In anwendungstechnisch zweckmäßiger Weise wird man neben der wenigstens einen zuzusetzenden wäßrigen Polymerisatausgangsdispersion I etwas Polymerisationsinitiator und einen geringen Teil des wenigstens einen zu polymerisierenden Monomeren (bezogen auf dessen Gesamtmenge in typischer Weise 1 bis 5 Gew.-%) ins Polymerisationsgefäß vorlegen, das Gemisch auf die Polymerisationstemperatur erhitzen und anschließend unter Aufrechterhaltung der Polymerisation die restlichen Monomeren und weiteren Polymerisationsinitiator dem Polymerisationsgefäß synchron so zulaufen lassen, daß ab Beginn der radikalischen wäßrigen Emulsionspolymerisation der Zulauf des wenigstens einen radikalisch polymerisierbarer Monomeren ins Polymerisationsgefäß so erfolgt, daß zu jedem Zeitpunkt des Zulaufs der Polymerisationsumsatz der bereits zuvor dem Polymerisationsgefäß insgesamt zugeführten Monomeren wenigstens 80, vorzugsweise wenigstens 90 mol.-% beträgt, wobei sich die Initiatorzufuhr vorzugsweise etwas über die Dauer der Monomerenzufuhr hinaus erstreckt. Die erfindungsgemäße radikalische wäßrige Emulsionspolymerisation kann aber auch so geführt werden, daß die Vorlage nur die wäßrige Polymerisatausgangsdispersion I enthält, auf die Polymerisationstemperatur erwärmt wird und anschließend Polymerisationsinitiator- und Monomerenzulauf gleichzeitig beginnend die Polymerisation auslösen. Natürlich kann im Verlauf des Zulaufsverfahrens dem Polymerisationsgefäß zusätzliches Dispergiermittel, z. B. räumlich getrennt oder als Bestandteil der Monomerenemulsion, zugeführt werden.

Falls dies der Fall ist, wird erfindungsgemäß so verfahren, daß die zu jedem Zeitpunkt ab Beginn der erfindinngsgemäßen radikalischen wäßrigen Emulsionspolymerisation im Polymerisationsgefäß enthaltene Menge an Dispergiermittel, auf die Summe der dem Polymerisationsgefäß bereits zugeführten Massen an Ausgangspolymerisat I und zu polymerisierenden Monomeren bezogen, 0,5 bis 5 Gew.-% beträgt.

Selbstverständlich kann sich im Verlauf der erfindungsgemäßen wäßrigen radikalischen Emulsionspolymerisation während des Zulaufverfahrens die Zusammensetzung der zuzuführenden Monomeren ändern. Ferner kann der Zulauf sowohl stufenförmig als auch kontinuierlich oder nach der Gradientenfahrweise erfolgen. Vorzugsweise erfolgt der Monomerenzulauf kontinuierlich.

Nach Beendigung des eigentlichen erfindinngsgemäßen Polymerisationsverfahrens wird vorzugsweise noch einige Stunden unter Aufrechterhaltung der Polymerisationstemperatur nachgerührt. Daran können sich übliche Maßnahmen zur Restmonomerenentfernung, zur Einstellung eines anderen pH-Wertes oder sonstige Methoden zur Nachstabilisierung, inklusive nachträglicher Zugabe an Dispergiermitteln, anschließen. Selbstverständlich können die verschiedenen möglichen, in der Regel räumlich getrennt erfolgenden, Zuläufe unmittelbar vor Eintritt in das Polymerisationsgefäß miteinander vermischt werden.

Bevorzugte Klassen von Endpolymerisaten sind solche, die

- zu 70 bis 100 Gew.-% aus Estern der Acryl- und/oder Methacrylsäure mit 1 bis 12 C-Atome aufweisenden Alkanolen und/oder Styrol

oder

- zu 70 bis 100 Gew.-% aus Styrol und/oder Butadien aufgebaut sind, wobei die Klasse der Acrylate besonders bevorzugt ist und vorzugsweise nachfolgende Monomerenzusammensetzung umfaßt:
  70 bis 99 Gew.-% wenigstens eines Esters der Acryl- und/oder Methacrylsäure mit 1 bis 8 C-Atome aufweisenden Alkanolen,
  1 bis 5 Gew.-% Acrylsäure, Methacrylsäure oder deren Gemisch und
  0 bis 25 Gew.-% Vinylacetat, Styrol oder deren Gemisch.

Bei der erfindungsgemäßen radikalischen wäßrigen Emulsionspolymerisation lassen sich in einfacher Weise wäßrige Polymerisatenddispersionen erhalten, die eine sehr breite Endpolymerisatteilchenverteilung aufweisen, welche in typischer Weise Element der beiden nachfolgenden Teilchenverteilungsraster ist:

2 bis 25 Gew.-% des Endpolymerisats ≦ 200 nm
10 bis 50 Gew.-% des Endpolymerisats ≦ 300 nm
30 bis 75 Gew.-% des Endpolymerisats ≦ 400 nm
45 bis 85 Gew.-% des Endpolymerisats ≦ 500 nm
100 Gew.-% des Endpolymerisats ≦ 700 nm

oder

2 bis 5 Gew.-% des Endpolymerisats ≦ 200 nm
8 bis 15 Gew.-% des Endpolymerisats ≦ 300 nm
18 bis 45 Gew.-% des Endpolymerisats ≦ 400 nm
20 bis 50 Gew.-% des Endpolymerisats ≦ 500 nm
22 bis 65 Gew.-% des Endpolymerisats ≦ 600 nm
50 bis 85 Gew.-% des Endpolymerisats ≦ 700 nm
55 bis 98 Gew.-% des Endpolymerisats ≦ 800 nm
100 Gew.-% des Endpolymerisats ≦ 1200 nm

Diese speziellen Teilchengrößenverteilungen sind vermutlich für den reduzierten Fließwiderstand der erfindinngsgemäßen wäßrigen Polymerisatenddispersionen verantwortlich, die normalerweise Newton'sscher Fließverhalten aufweisen. Unterhalb einer Feststoffvolumenkonzentration von 50 Vol.-% nimmt der Einfluß der Teilchengrößenverteilung auf den Fließwiderstand zunehmend ab. Die erfindinngsgemäßen wäßrigen Polymerisatenddispersionen werden wie beschrieben in der Regel mit voll befriedigender Reproduzierbarkeit und in Abwesenheit von Ausflockungen mit Feststoffvolumenkonzentrationen von bis zu 75 Vol.-% in großtechnisch einfach realisierbarer Weise erhalten.

Besonders ausgeprägt entfalten die erfindinngsgemäßen wäßrigen Polymerisatenddispersionen ihre vorteilhaften Eigenschaften bei Feststoffvolumenkonzentrationen oberhalb von 65 Vol.-%, weshalb solche Polymerisatenddispersionen bevorzugt sind. Sie eignen sich generell als Bindemittel sowie als Massen zur Herstellung von Beschichtungen und Verklebungen, wobei diesbezüglich in an sich bekannter Weise zusätzliche Hilfsstoffe wie Filmbildehilfsmittel, Füllstoffe oder Weichmacher zugesetzt werden können.

Beispiele

Beispiel 1

Herstellung wäßriger Polymerisatausgangsdispersionen II (ADII(1) bis ADII(8)) von Ausgangspolymerisaten II (APII(1) bis APII(8))

ADII(1): Ein Geisch aus

| | |
|---|---|
| 1,44 kg | n-Butylacrylat |
| 16,28 kg | Wasser |
| 1,27 kg | einer 45 gew.-%igen Dowfax 2A1 entsprechenden grenzflächenaktiven Substanz |
| 0,52 kg | einer 30 gew.-%igen wäßrigen Wasserstoffperoxidlösung |

wurde bei 25°C mit 25 Gew.-% des Zulaufs II auf einmal versetzt. Nachdem sich das Gemisch durch die einsetzende exotherme Polymerisation auf 50°C erwärmt hatte (nach ca. 10 min) wurden unter Aufrechterhalten der 50°C zeitgleich beginnend die Restmenge des Zulauf II (innerhalb von 3 h) und die Gesamtmenge des Zulauf I (innerhalb von 2 h) kontinuierlich zugeführt. Anschließend wurde noch 1 h bei 60°C nachgerührt.

Zulauf I:

| | |
|---|---|
| 47,0 kg | Wasser |
| 14,7 kg | n-Butylacrylat |
| 14,7 kg | Methylmethacrylat |
| 0,60 kg | Methacrylsäure |
| 0,664 kg | einer 45 gew.-%igen wäßrigen Lösung der Dowfax 2A1 entsprechenden grenzflächenaktiven Substanz |

Zulauf II:

| | |
|---|---|
| 10 kg | Wasser |
| 0,156 kg | Ascorbinsäure |
| 0,004 kg | Eisen(II)-sulfat. |

Es wurde eine wäßrige Dispersion ADII(1) erhalten, die wie folgt charakterisiert ist:

| | |
|---|---|
| Feststoffgehalt: | 30 Gew.-% |
| $\bar{d}_{w,1}$ : | 40 nm |

$$\left(\frac{d_{90} - d_{10}}{d_{50}}\right)_1 : 0{,}549$$

ADII(2): Ein Gemisch aus

| | |
|---|---|
| 521 g | Wasser |
| 12 g | einer 30 gew.-%igen wäßrigen Wasserstoffperoxidlösung |
| 600 g | wäßrige Dispersion ADII(1) |

wurde auf 60°C erwärmt und unter Aufrechterhalten dieser Temperatur zeitgleich beginnend mit Zulauf I (innerhalb von 2,5 h) und Zulauf II (innerhalb von 3 h) kontinuierlich versetzt. Anschließend wurde noch 1 h bei 60°C nachgerührt.

Zulauf I:

| | |
|---|---|
| 1176 g | n-Butylacrylat |
| 24 g | Methacrylsäure |
| 30 g | einer 20 gew.-%igen wäßrigen Lösung eines ethoxylierten Fettalkohols ($C_{18}$, EO-Grad:18) und |

| | |
|---|---|
| 60 g | einer 45 gew.-%igen wäßrigen Lösung der Dowfax 2A1 entsprechenden grenzflächenaktiven Substanz |

Zulauf II:

| | |
|---|---|
| 3,6 g | Ascorbinsäure |
| 0,12 g | Eisen(II)-sulfat |
| 400 g | Wasser. |

Es wurde eine wäßrige Dispersion ADII(2) erhalten, die wie folgt charakterisiert ist:

| | |
|---|---|
| Feststoffgehalt: | 40,8 Gew.-% |
| $\bar{d}_{w,2}$ : | 84 nm |

$$\left(\frac{d_{90} - d_{10}}{d_{50}}\right)_2 : 0{,}288$$

ADII(3): Wie ADII(2), das vorgelegte Gemisch bestand jedoch aus

| | |
|---|---|
| 602 g | Wasser |
| 12 g | einer 30 gew.-%igen wäßrigen Wasserstoffperoxidlösung |
| 300 g | wäßrige Dispersion ADII(1). |

Die erhaltene wäßrige Dispersion ADII(3) war wie folgt charakterisiert:

| | |
|---|---|
| Feststoffgehalt: | 40,8 Gew.-% |
| $\bar{d}_{w,3}$ : | 95 nm |

$$\left(\frac{d_{90} - d_{10}}{d_{50}}\right)_3 : 0{,}219$$

ADII(4): Wie ADII(2), das vorgelegte Gemisch bestand jedoch aus

| | |
|---|---|
| 639 g | Wasser |
| 12 g | einer 30 gew.-%igen wäßrigen Wasserstoffperoxidlösung |
| 160 g | wäßrige Dispersion ADII(1). |

ADII(4) war wie folgt charakterisiert:

| | |
|---|---|
| Feststoffgehalt: | 40,3 Gew.-% |
| $\bar{d}_{w,4}$ : | 122 nm |

$$\left(\frac{d_{90} - d_{10}}{d_{50}}\right)_4 : 0{,}201$$

ADII(5): Wie ADII(2), das vorgelegte Gemisch bestand jedoch aus

| | |
|---|---|
| 661 g | Wasser |
| 12 g | einer 30 gew.-%igen wäßrigen Wasserstoffperoxidlösung |
| 80 g | wäßrige Dispersion ADII(1). |

ADII(5) war wie folgt charakterisiert:

| | |
|---|---|
| Feststoffgehalt: | 40,7 Gew.-% |
| $\bar{d}_{w,5}$ : | 150 nm |

$$\left(\frac{d_{90}-d_{10}}{d_{50}}\right)_5 : 0{,}179$$

ADII(6): Wie ADII(2), das vorgelegte Gemisch bestand jedoch aus

| | |
|---|---|
| 672 g | Wasser |
| 12 g | einer 30 gew.-%igen wäßrigen Wasserstoffperoxidlösung |
| 40 g | wäßrige Dispersion ADII(1). |

ADII(6) war wie folgt charakterisiert:

| | |
|---|---|
| Feststoffgehalt: | 40,8 Gew.-% |
| $\bar{d}_{w,6}$ : | 198 nm |

$$\left(\frac{d_{90}-d_{10}}{d_{50}}\right)_6 : 0{,}167$$

ADII(7): Wie ADII(2), das vorgelegte Gemisch bestand jedoch aus

| | |
|---|---|
| 677 g | Wasser |
| 12 g | einer 30 gew.-%igen wäßrigen Wasserstoffperoxidlösung |
| 20 g | wäßrige Dispersion ADII(1). |

ADII(7) war wie folgt charakterisiert:

| | |
|---|---|
| Feststoffgehalt: | 41,0 Gew.-% |
| $\bar{d}_{w,7}$ : | 233 nm |

$$\left(\frac{d_{90}-d_{10}}{d_{50}}\right)_7 : 0{,}183$$

ADII(8): Wie ADII(2), das vorgelegte Gemisch bestand jedoch aus

| | |
|---|---|
| 680 g | Wasser |
| 12 g | einer 30 gew.-%igen wäßrigen Wasserstoffperoxidlösung |
| 10 g | wäßrige Dispersion ADII(1). |

ADII(8) war wie folgt charakterisiert:

| | |
|---|---|
| Feststoffgehalt: | 40,7 Gew.-% |
| $\bar{d}_{w,8}$ : | 283 nm |

$$\left(\frac{d_{90}-d_{10}}{d_{50}}\right)_8 : 0{,}145$$

Beispiel 2

Herstellung wäßriger Polymerisatausgangsdispersionen I (ADI(1) bis ADI(9))

Die Herstellung der Dispersionen ADI(1) bis ADI(9) erfolgte in einfacher Weise durch Zusammengeben von verschiedenen in Beispiel 1 erhaltenen Dispersionen ADII, wobei die verwendeten Mengen der eingesetzten Dispersionen ADII aus Beispiel 1 so bemessen wurden, daß in den resultierenden Dispersionen ADI die Ausgangspolymerisate APII mit den in der nachfolgenden Tabelle 1 wiedergegebenen Volumenanteilen (Vol.-%, bezogen auf das Gesamtvolumen aller in der jeweiligen Dispersion ADI enthaltenen Ausgangspolymerisate APII) enthalten waren. Demgemäß betrug der Feststoffgehalt der ADI in allen Fällen ca. 40 Gew.-%.

Tabelle 1

| Vol.-% | APII(1) | APII(2) | APII(3) | APII(4) | APII(5) | APII(6) | APII(7) | APII(8) |
|---|---|---|---|---|---|---|---|---|
| ADI(1) | 0,7 | 3,1 | 3,9 | 6,5 | 10,0 | 17,1 | 23,7 | 35,0 |
| ADI(2) | 0,8 | - | - | - | - | - | 44,8 | 54,4 |
| ADI(3) | 0,6 | - | - | - | 22,4 | - | 34,8 | 42,2 |
| ADI(4) | - | 1,24 | - | - | 22,26 | - | 34,6 | 41,9 |
| ADI(5) | 0,81 | - | - | - | - | 22,4 | 30,96 | 45,73 |
| ADI(6) | 2,0 | - | - | - | - | 22,2 | 30,6 | 45,2 |
| ADI(7) | 3,0 | - | - | - | - | 21,9 | 30,3 | 44,8 |
| ADI(8) | 1,9 | - | - | - | - | - | - | 98,1 |
| ADI(9) | 4,5 | - | - | - | - | 21,7 | 33,7 | 40,1 |

Beispiel 3

Herstellung erfindungsgemäßer wäßriger Polymerisatenddispersionen ED(1) bis ED(13)

Ein Gemisch aus Wasser, einer 30 gew.-%igen wäßrigen Wasserstoffperoxidlösung, einer Polymerisatausgangsdispersion I aus Beispiel 2 und einem Teil des Zulaufs I wurde auf 70°C erhitzt, und anschließend zeitgleich beginnend die Restmenge des Zulaufs I (innerhalb von 3 h) und Zulauf II (die ersten 10 Gew.-% in 20 min, die restlichen 90 Gew.-% innerhalb von 220 min), unter Aufrechterhaltung der Polymerisationstemperatur, kontinuierlich zugesetzt. Anschließend wurde noch 1 h bei 70°C nachgerührt.

Die Zusammensetzung von Zulauf I lautete für ED(1) bis ED(10) wie folgt:

| | |
|---|---|
| 1960 g | n-Butylacrylat |
| 40 g | Methacrysäure |
| 100 g | einer 20 gew.-%igen wäßrigen Lösung der Dowfax 2A1 entsprechenden grenzflächenaktiven Substanz, |
| 50 g | einer 20 gew.-%igen wäßrigen Lösung eines ethoxylierten Fettalkohols ($C_{18}$, EO-Grad:18) und |
| W g | Wasser, |

wobei W so bemessen wurde, daß die in der Tabelle 2 aufgezeigten Feststoffgehalte der jeweiligen erfindungsgemäßen wäßrigen Polymerisatenddispersion resultierten.

Für ED(11) bis ED(13) waren die Zuläufe I entsprechend zusammengesetzt, die 1960 g n-Butylacrylat wurden jedoch ersetzt durch

ED(11):

| | |
|---|---|
| 1560 g | n-Butylacrylat |
| 400 g | Methylmethacrylat |

ED(12):

| | |
|---|---|
| 1560 g | n-Butylacrylat |
| 400 g | Methylacrylat |

ED(13):

| | |
|---|---|
| 1560 g | n-Butylacrylat |
| 400 g | Vinylacetat. |

Die Zusammensetzung von Zulauf II lautete in allen Fällen:

| | |
|---|---|
| 300 g | Wasser |
| 6 g | Ascorbinsäure |
| 0,2 g | Eisen(II)-sulfat. |

Tabelle 2 gibt die jeweilige Zusammensetzung der Vorlage (Mengenangaben in Gramm), den Feststoffgehalt und die Volumenkonzentration der Enddispersion (Gew.-% bzw. Vol.-%) sowie die dynamischen Viskositäten $\eta_{60}$ und $\eta_{60,9}$ von auf einheitliche 60 Gew.-% beziehungsweise 60,9 Vol.-% verdünnten wäßrigen Polymerisatenddispersionen in mPa • s wieder, wobei die η-Bestimmungen gemäß DIN 53019 bei 23°C und einem Schergefälle von 487 $s^{-1}$ erfolgten.

Tabelle 3 gibt zusätzlich die Endpolymerisatteilchengrößenverteilung wieder (Gew.-% der Teilchen des Endpolymerisats, deren Teilchendurchmesser ≦ X nm ist, wobei X ein Element aus der Menge {200, 300, 400, 500, 600, 700, 800, 900, 1000, 1200} ist).

Tabelle 2

Enddispersionen ED

| | (1) | (2) | (3) | (4) | (5) | (6) | (7) | (8) | (9) | (10) | (11) | (12) | (13) |
|---|---|---|---|---|---|---|---|---|---|---|---|---|---|
| Wasser | 251 | 224 | 169 | 169 | 169 | 169 | 246 | 246 | 246 | 246 | 169 | 169 | 169 |
| Peroxid-lösung | 13,33 | 13,33 | 13,33 | 13,33 | 13,33 | 13,33 | 13,33 | 13,33 | 13,33 | 13,33 | 13,33 | 13,33 | 13,33 |
| ADI ( ) | 62,5 (1) | 125 (1) | 250 (1) | 250 (2) | 250 (3) | 250 (4) | 75 (5) | 75 (6) | 75 (7) | 75 (8) | 250 (9) | 250 (9) | 250 (9) |
| Teil Zulauf I | 45,5 | 45,5 | 45,5 | 45,5 | 45,5 | - | 45,5 | 45,5 | 45,5 | 45,5 | 45,5 | 45,5 | 45,5 |
| Feststoffgehalt | 68,0 | 67,1 | 65,8 | 68,0 | 66,6 | 66,8 | 70,6 | 67,8 | 67,5 | 70,3 | 65,9 | 67,1 | 64,7 |
| Volumenkonzentration | 64,8 | 63,9 | 62,7 | 64,8 | 63,4 | 63,6 | 67,2 | 64,6 | 64,3 | 67,0 | 60,0 | 60,6 | 58,9 |
| $\eta_{60}$ | 21 | 44 | 56 | 29 | 43 | 45 | - | - | - | - | 50 | 37 | 33 |
| $\eta_{60,9}$ | 100 | 170 | 200 | 89 | 140 | 160 | 48 | 88 | 100 | 59 | - | - | - |

Tabelle 3

| ED ( ) | 200 | 300 | 400 | 500 | 600 | 700 | 800 | 900 | 100 0 | 120 0 |
|---|---|---|---|---|---|---|---|---|---|---|
| (1) | 4 | 38 | 63 | 78 | 98 | 100 | - | - | - | - |
| (2) | 3 | 12 | 22 | 43 | 65 | 83 | 95 | 100 | - | - |
| (3) | 4 | 15 | 47 | 74 | 92 | 100 | - | - | - | - |
| (4) | 4 | 11 | 18 | 21 | 22 | 72 | 98 | 100 | - | - |
| (5) | 3 | 11 | 33 | 48 | 97 | 100 | - | - | - | - |
| (6) | 4 | 11 | 46 | 74 | 98 | 100 | - | - | - | - |
| (7) | 2 | 14 | 24 | 35 | 36 | 50 | 78 | 98 | 98 | 100 |
| (8) | 4 | 8 | 40 | 43 | 46 | 68 | 86 | - | - | - |
| (9) | 4 | 10 | 44 | 46 | 50 | 78 | 95 | - | - | - |
| (10) | 4 | 8 | 30 | 50 | 52 | 54 | 56 | 100 | 100 | - |
| (11) | 24 | 47 | 75 | 82 | 100 | - | - | - | - | - |
| (12) | 12 | 42 | 64 | 74 | 95 | 100 | - | - | - | - |
| (13) | 20 | 40 | 61 | 75 | 98 | 100 | - | - | - | - |

**Patentansprüche**

**1.** Wäßrige Polymerisatenddispersion, die eine Feststoffvolumenkonzentration von wenigstens 50 Vol.-% aufweist, dadurch erhältlich, daß man wenigstens ein von Vinyl- und Vinylidenhalogeniden verschiedenes radikalisch polymerisierbares Monomeres unter Zusatz wenigstens einer wäßrigen Polymerisatausgangsdispersion I in einem Polymerisationsgefäß nach dem Verfahren der radikalischen wäßrigen Emulsionspolymerisation in Gegenwart von Dispergiermitteln und radikalischen Polymerisationsinitiatoren mit der Maßgabe polymerisiert, daß

A) die in der wenigstens einen zugesetzten wäßrigen Polymerisatausgangsdispersion I enthaltene Masse an Polymerisat, bezogen auf die Gesamtmasse, gebildet aus der Masse des wenigstens einen radikalisch polymerisierbaren Monomeren und der in Form der wäßrigen Polymerisatausgangsdispersion I zugesetzten Masse an Polymerisat, 1 bis 10, vorzugsweise 1 bis 5 % beträgt,

B) die wenigstens eine zugesetzte wäßrige Polymerisatausgangsdispersion I so wie eine durch Zusammengeben von n wäßrigen Polymerisatausgangsdispersionen II erhaltene wäßrige Polymerisatdispersion beschaffen ist, bei welcher das Zusammengeben mit der Maßgabe erfolgte, daß

a) n eine ganze Zahl $\geqq 2$ ist,

b) der gewichtsmittlere Teilchendurchmesser der in den jeweiligen wäßrigen Polymerisatausgangsdispersionen II in disperser Verteilung vorliegenden Ausgangspolymerisatteilchen für jede wäßrige Polymerisatausgangsdispersion II im Bereich > 0 bis 400 nm liegt,

c) der gewichtsmittlere Teilchendurchmesser der Ausgangspolymerisatteilchen wenigstens einer wäßrigen Polymerisatausgangsdispersion II im Bereich > 0 bis 100 nm liegt,

d) die wäßrigen Polymerisatausgangsdispersionen II eine monomodale Verteilung der Durchmesser der in ihnen enthaltenen Ausgangspolymerisatteilchen aufweisen, die so beschaffen ist, daß wenn $d_x$ den Durchmesser definiert, unterhalb dessen der Teilchendurchmesser von X Gew.-% aller in der jeweiligen wäßrigen Ausgangsdispersion II vorhandenen Ausgangspolymerisatteilchen liegt, der Quotient $(d_{90}-d_{10})/d_{50}$ einen Wert von 0,1 bis 0,6 annimmt,

e) zwischen dem durch Division der in der i-ten wäßrigen Polymerisatausgangsdispersion II enthaltenen Masse des i-ten Ausgangspolymerisats II mit der Massendichte des i-ten Ausgangspolymerisats II erhältlichen Volumen $V_i$ und dem in entsprechender Weise bestimmten Volumen $V_j$, unter der Voraussetzung, daß sowohl der gewichtsmittlere Teilchendurchmesser der in der i-ten wäßrigen Polymerisatausgangsdispersion II enthaltenen Ausgangspolymerisatteilchen ($\bar{d}_{w,i}$), als auch $\bar{d}_{w,j}$ oberhalb von 100 nm liegt, die Beziehung 1

$$V_i = V_j \cdot k . \left(\frac{\bar{d}_{w,i}}{\bar{d}_{w,j}}\right)^2 \qquad (1),$$

mit k = 1/1,5 bis 1,5 , erfüllt ist,

f) zwischen dem über die Gesamtmenge aller wäßrigen Polymerisatausgangsdispersionen II, die einen gewichtsmittleren Teilchendurchmesser der in ihnen enthaltenen Ausgangspolymerisatteilchen im Bereich von > 0 bis ≤ 100 nm aufweisen, ermittelten gewichtsmittleren Teilchendurchmesser der in dieser Gesamtmenge enthaltenen Ausgangspolymerisatteilchen ($\bar{d}_{w,\leq 100}$) und dem gewichtsmittleren Teilchendurchmesser der in der i-ten wäßrigen Polymerisatausgangsdispersion II enthaltenen Ausgangspolymerisatteilchen ($\bar{d}_{w,i}$), unter der Voraussetzung, daß $\bar{d}_{w,i}$ > 100 nm ist, die Beziehung 2

$$V_i = V_{\leq 100} \cdot k' \left(\frac{\bar{d}_{w,i}}{\bar{d}_{w,\leq 100}}\right)^2 \qquad (2),$$

mit k' = 0,5 bis 5,

$V_i$ = Masse des in der i-ten wäßrigen Polymerisatausgangsdispersion II enthaltenen Ausgangspolymerisats dividiert durch dessen Massendichte,

$V_{\leq 100}$ = Masse des in der Gesamtmenge aller wäßrigen Polymerisatausgangsdispersionen II, die einen gewichtsmittleren Teilchendurchmesser der in ihnen enthaltenen Ausgangspolymerisatteilchen im Bereich von > 0 bis ≤ 100 nm aufweisen, enthaltenen Ausgangspolymerisats dividiert durch dessen Massendichte,

erfüllt ist,

g) $V_{\leq 100}$, bezogen auf die Summe aller $V_i$, 0,3 bis 10 Vol.-% beträgt und

h) die Differenz zwischen dem kleinsten und dem größten gewichtsmittleren Teilchendurchmesser $\bar{d}_{w,i}$ der in der wäßrigen Polymerisatausgangsdispersion I enthaltenen wäßrigen Polymerisatausgangsdispersionen II wenigstens 150 nm beträgt,

C) die Gesamtmenge der wenigstens einen zuzusetzenden wäßrigen Polymerisatausgangsdispersion I vor Beginn der radikalischen wäßrigen Emulsionspolymerisation ins Polymerisationsgefäß vorgelegt wird und

D) die radikalische wäßrige Emulsionspolymerisation des wenigstens einen radikalisch polymerisierbaren Monomeren nach dem Zulaufverfahren mit der Maßgabe erfolgt, daß

- ab Beginn der radikalischen wäßrigen Emulsionspolymerisation der Zulauf des wenigstens einen radikalisch polymerisierbaren Monomeren ins Polymerisationsgefäß so erfolgt, daß zu jedem Zeitpunkt des Zulaufs der Polymerisationsumsatz der bereits zuvor dem Polymerisationsgefäß insgesamt zugeführten Monomeren wenigstens 80 mol.-% beträgt und

- die zu jedem Zeitpunkt ab Beginn der radikalischen wäßrigen Emulsionspolymerisation im Polymerisationsgefäß enthaltene Menge an Dispergiermittel, bezogen auf die Summe der dem Polymerisationsgefäß bereits zugeführten Massen an Ausgangspolymerisat I und zu polymerisierenden Monomeren, 0,5 bis 5 Gew.-% beträgt.

2. Wäßrige Polymerisatenddispersion nach Anspruch 1, dadurch erhältlich, daß man als wenigstens eine wäßrige Polymerisatausgangsdispersion I eine solche einsetzt, die an wäßrigen Polymerisatausgangsdispersionen II mit einem $\overline{d}_{w,i} \leqq 100$ nm nur solche enthält, deren $\overline{d}_{w,i}$ ausschließlich im Bereich von $\geqq 20$ nm bis $\leqq 100$ nm, vorzugsweise im Bereich von $\geqq 30$ bis $\leqq 60$ nm liegen.

3. Wäßrige Polymerisatenddispersion nach Anspruch 1 oder 2, dadurch erhältlich, daß man als wenigstens eine wäßrige Polymerisatausgangsdispersion I eine solche einsetzt, die nur solche wäßrigen Polymerisatausgangsdispersionen II beinhaltet, daß die Differenz zwischen $\overline{d}_{w,\leqq 100}$ und $\overline{d}_{w,i}$, wobei $\overline{d}_{w,i}$ hier der gewichtsmittlere Teilchendurchmesser derjenigen in der wäßrigen Polymerisatausgangsdispersion I enthalten wäßrigen Polymerisatausgangsdispersion II ist, dessen oberhalb von 100 nm liegender Wert am nächsten bei 100 nm liegt, wenigstens 60, vorzugsweise 100 nm beträgt.

4. Wäßrige Polymerisatenddispersion nach Anspruch 1 bis 3, dadurch erhältlich, daß man als wenigstens eine wäßrige Polymerisatausgangsdispersion I eine solche einsetzt, deren k-Werte im Bereich 0,9 bis 1,1 und deren k'-Werte im Bereich 0,75 bis 3 liegen.

5. Wäßrige Polymerisatenddispersion nach Anspruch 1 bis 4, dadurch erhältlich, daß man als wenigstens eine wäßrige Polymerisatausgangsdispersion I eine solche einsetzt, deren $V_{\leqq 100}$, bezogen auf die Summe aller in ihr enthaltenen $V_i$, 0,5 bis 5 Vol.-% beträgt.

6. Wäßrige Polymerisatdispersion nach Ansprüchen 1 bis 5, deren Feststoffvolumenkonzentration $\geqq$ 50 Vol.-% beträgt und die folgende Polymerisatteilchengrößenverteilung aufweist:

2 bis 25 Gew.-% des Polymerisats $\leqq$ 200 nm
10 bis 50 Gew.-% des Polymerisats $\leqq$ 300 nm
30 bis 75 Gew.-% des Polymerisats $\leqq$ 400 nm
45 bis 85 Gew.-% des Polymerisats $\leqq$ 500 nm
100 Gew.-% des Polymerisats $\leqq$ 700 nm,

wobei das Polymerisat kein Vinyl- oder Vinylidenhalogenid enthält.

7. Wäßrige Polymerisatdispersion nach Ansprüchen 1 bis 5, deren Feststoffvolumenkonzentration $\geqq$ 50 Vol.-% beträgt und die folgende Polymerisatteilchengrößenverteilung aufweist:

2 bis 5 Gew.-% des Polymerisats $\leqq$ 200 nm
8 bis 15 Gew.-% des Polymerisats $\leqq$ 300 nm
15 bis 45 Gew.-% des Polymerisats $\leqq$ 400 nm
20 bis 50 Gew.-% des Polymerisats $\leqq$ 500 nm
22 bis 65 Gew.-% des Polymerisats $\leqq$ 600 nm
50 bis 85 Gew.-% des Polymerisats $\leqq$ 700 nm
55 bis 98 Gew.-% des Polymerisats $\leqq$ 800 nm
100 Gew.-% des Polymerisats $\leqq$ 1200 nm,

wobei das Polymerisat kein Vinyl- oder Vinylidenhalogenid enthält.

8. Verfahren zur Herstellung einer wäßrigen Polymerisatdispersion gemäß Anspruch 1, dadurch gekennzeichnet, daß man wenigstens ein von Vinyl- und Vinylidenhalogeniden verschiedenes radikalisch polymerisierbares Monomeres unter Zusatz wenigstens einer wäßrigen Polymerisatausgansdispersion I in einem Polymerisationsgefäß nach dem Verfahren der radikalischen wäßrigen Emulsionspolymerisation in Gegenwart von Dispergiermitteln und radikalischen Polymerisationsinitiatoren mit der Maßgabe polymerisiert, daß

A) die in der wenigstens einen zugesetzten wäßrigen Polymerisatausgangsdispersion I enthaltene Masse an Polymerisat, bezogen auf die Gesamtmasse, gebildet aus der Masse des wenigstens einen radikalisch polymerisierbaren Monomeren und der in Form der wäßrigen Polymerisatausgangsdispersion I zugesetzten Masse an Polymerisat, 1 bis 10, vorzugsweise 1 bis 5 % beträgt,

B) die wenigstens eine zugesetzte wäßrige Polymerisatausgangsdispersion I so wie eine durch Zusammengeben von n wäßrigen Polymerisatausgangsdispersionen II erhaltene wäßrige Polymerisatdispersion beschaffen ist, bei welcher das Zusammengeben mit der Maßgabe erfolgte, daß

a) n eine ganze Zahl ≧ 2 ist,

b) der gewichtsmittlere Teilchendurchmesser der in den jeweiligen wäßrigen Polymerisatausgangsdispersionen II in disperser Verteilung vorliegenden Ausgangspolymerisatteilchen für jede wäßrige Polymerisatausgangsdispersion II im Bereich > 0 bis 400 nm liegt,

c) der gewichtsmittlere Teilchendurchmesser der Ausgangspolymerisatteilchen wenigstens einer wäßrigen Polymerisatausgangsdispersion II im Bereich > 0 bis 100 nm liegt,

d) die wäßrigen Polymerisatausgangsdispersionen II eine monomodale Verteilung der Durchmesser der in ihnen enthaltenen Ausgangspolymerisatteilchen aufweisen, die so beschaffen ist, daß wenn $d_x$ den Durchmesser definiert, unterhalb dessen der Teilchendurchmesser von X Gew.-% aller in der jeweiligen wäßrigen Ausgangsdispersion II vorhandenen Ausgangspolymerisatteilchen liegt, der Quotient $(d_{90}-d_{10})/d_{50}$ einen Wert von 0,1 bis 0,6 annimmt,

e) zwischen dem durch Division der in der i-ten wäßrigen Polymerisatausgangsdispersion II enthaltenen Masse des i-ten Ausgangspolymerisats II mit der Massendichte des i-ten Ausgangspolymerisats II erhältlichen Volumen $V_i$ und dem in entsprechender Weise bestimmten Volumen $V_j$, unter der Voraussetzung, daß sowohl der gewichtsmittlere Teilchendurchmesser der in der i-ten wäßrigen Polymerisatausgangsdispersion II enthaltenen Ausgangspolymerisatteilchen ($\bar{d}_{w,i}$), als auch $\bar{d}_{w,j}$ oberhalb von 100 nm liegt, die Beziehung 1

$$V_i = V_j \cdot k \cdot \left(\frac{\bar{d}_{w,i}}{\bar{d}_{w,j}}\right)^2 \quad (1),$$

mit k = 1/1,5 bis 1,5 , erfüllt ist,

f) zwischen dem über die Gesamtmenge aller wäßrigen Polymerisatausgangsdispersionen II, die einen gewichtsmittleren Teilchendurchmesser der in ihnen enthaltenen Ausgangspolymerisatteilchen im Bereich von > 0 bis ≦ 100 nm aufweisen, ermittelten gewichtsmittleren Teilchendurchmesser der in dieser Gesamtmenge enthaltenen Ausgangspolymerisatteilchen ($\bar{d}_{w,\leqq 100}$) und dem gewichtsmittleren Teilchendurchmesser der in der i-ten wäßrigen Polymerisatausgangsdispersion II enthaltenen Ausgangspolymerisatteilchen ($\bar{d}_{w,i}$), unter der Voraussetzung, daß $\bar{d}_{w,i}$ > 100 nm ist, die Beziehung 2

$$V_i = V_{\leqq 100} \cdot k' \left(\frac{\bar{d}_{w,i}}{\bar{d}_{w,\leqq 100}}\right)^2 \quad (2),$$

mit k' = 0,5 bis 5,

| | |
|---|---|
| $V_i$ = | Masse des in der i-ten wäßrigen Polymerisatausgangsdispersion II enthaltenen Ausgangspolymerisats dividiert durch dessen Massendichte, |
| $V_{\leqq 100}$ = | Masse des in der Gesamtmenge aller wäßrigen Polymerisatausgangsdispersionen II, die einen gewichtsmittleren Teilchendurchmesser der in ihnen enthaltenen Ausgangspolymerisatteilchen im Bereich von > 0 bis ≦ 100 nm aufweisen, enthaltenen Ausgangspolymerisats dividiert durch dessen Massendichte, |

erfüllt ist,

g) $V_{\leqq 100}$, bezogen auf die Summe aller $V_i$, 0,3 bis 10 Vol.-% beträgt und

h) die Differenz zwischen dem kleinsten und dem größten gewichtsmittleren Teilchendurchmesser $\bar{d}_{w,i}$ der in der wäßrigen Polymerisatausgangsdispersion I enthaltenen wäßrigen Polymerisatausgangsdispersionen II wenigstens 150 nm beträgt,

C) die Gesamtmenge der wenigstens einen zuzusetzenden wäßrigen Polymerisatausgangsdispersion I vor Beginn der radikalischen wäßrigen Emulsionspolymerisation ins Polymerisationsgefäß vorgelegt wird und

D) die radikalische wäßrige Emulsionspolymerisation des wenigstens einen radikalisch polymerisierbaren Monomeren nach dem Zulaufverfahren mit der Maßgabe erfolgt, daß

- ab Beginn der radikalischen wäßrigen Emulsionspolymerisation der Zulauf des wenigstens einen radikalisch polymerisierbaren Monomeren ins Polymerisationsgefäß so erfolgt, daß zu jedem Zeitpunkt des Zulaufs der Polymerisationsumsatz der bereits zuvor dem Polymerisationsgefäß insgesamt zugeführten Monomeren wenigstens 80 mol.-% beträgt und
- die zu jedem Zeitpunkt ab Beginn der radikalischen wäßrigen Emulsionspolymerisation im Polymerisationsgefäß enthaltene Menge an Dispergiermittel, bezogen auf die Summe der dem Polymerisationsgefäß bereits zugeführten Massen an Ausgangspolymerisat I und zu polymerisierenden Monomeren, 0,5 bis 5 Gew.-% beträgt.

**9.** Verwendung wäßriger Polymerisatdispersionen gemäß den Ansprüchen 1 bis 7 als Bindemittel und als Massen zur Herstellung von Beschichtungen und Verklebungen.

## Claims

**1.** A final aqueous polymer dispersion having a solids volume concentration of at least 50 % by volume, obtainable by polymerizing at least one radical polymerizable monomer other than a vinyl or vinylidene halide with the addition of at least one aqueous starting polymer dispersion I in a polymerization vessel by the method of free radical aqueous emulsion polymerization in the presence of dispersants and free radical polymerization initiators with the proviso that

A) the mass of polymer contained in the at least one aqueous starting polymer dispersion I added relative to the total mass comprising the mass of the at least one radical polymerizable monomer and the mass of polymer added in the form of the aqueous starting polymer dispersion I is from 1 to 10 %, preferably from 1 to 5 %,
B) the at least one aqueous starting polymer dispersion I added is constituted like an aqueous polymer dispersion obtained by adding together n aqueous starting polymer dispersions II with the proviso that

a) n is an integer $\geqq 2$,
b) the weight average particle diameter of the starting polymer particles present in dispersion in the respective aqueous starting polymer dispersions II is for every aqueous starting polymer dispersion II within the range > 0 to 400 nm,
c) the weight average particle diameter of the starting polymer particles of at least one aqueous starting polymer dispersion II is within the range > 0 to 100 nm,
d) the aqueous starting polymer dispersions II have a monomodal distribution of the diameters of the starting polymer particles they contain such that, if $d_X$ defines the diameter below which is the particle diameter of X % by weight of all the starting polymer particles present in the particular aqueous starting dispersion II, the ratio $(d_{90}-d_{10})/d_{50}$ is from 0.1 to 0.6,
e) the relation between the volume $V_i$, obtainable by dividing the mass of the i-th starting polymer II present in the i-th aqueous starting polymer dispersion II by the mass density of the i-th starting polymer II, and the similarly determined volume $V_j$, providing that not only the weight average particle diameter ($\bar{d}_{w,i}$) of the starting polymer particles present in the i-th aqueous starting polymer dispersion II but also $\bar{d}_{w,j}$ is above 100 nm, satisfies equation 1

$$V_i = V_j \cdot k \cdot \left(\frac{\bar{d}_{w,i}}{\bar{d}_{w,j}}\right)^2 \quad (1)$$

where k is from 1/1.5 to 1.5,
f) the relation between the weight average particle diameter ($\bar{d}_{w,\leqq 100}$) of the starting polymer particles determined over the total amount of all the aqueous starting polymer dispersions II that have a weight average particle diameter of the starting polymer particles they contain within the range from > 0 to $\leqq$ 100 nm, and the weight average particle diameter ($\bar{d}_{w,i}$) of the starting polymer particles present in the i-th aqueous starting polymer dispersion II, providing that $\bar{d}_{w,i}$ is > 100 nm, satisfies equation 2

$$V_i = V_{\leq 100} \cdot k' \left( \frac{\bar{d}_{w,i}}{\bar{d}_{w,\leq 100}} \right)^2 \qquad (2)$$

where k' is from 0.5 to 5,

$V_i$ is the mass of the starting polymer present in the i-th aqueous starting polymer dispersion II divided by the mass density of the starting polymer,

$V_{\leq 100}$ is the mass of the starting polymer present in the total amount of all aqueous starting polymer dispersions II that have a weight average particle diameter of the starting polymer particles they contain within the range from > 0 to ≦ 100 nm, divided by the mass density of the starting polymer,

g) $V_{\leq 100}$ is from 0.3 to 10 % by volume, based on the sum of all $V_i$, and
h) the difference between the smallest and the largest weight average particle diameter $\bar{d}_{w,i}$ of the aqueous starting polymer dispersions II present in the aqueous starting polymer dispersion I is at least 150 nm,

C) the total amount of the at least one aqueous starting polymer dispersion I to be added is introduced into the polymerization vessel as initial charge prior to the start of the free radical aqueous emulsion polymerization, and
D) the free radical aqueous emulsion polymerization of the at least one radical polymerizable monomer is effected by the stream addition method with the proviso that

- from the start of the free radical aqueous emulsion polymerization the addition of the at least one radical polymerizable monomer to the polymerization vessel is effected in such a way that at any time of the addition the polymerization conversion of the total monomers already added previously to the polymerization vessel is at least 80 mol %, and
- the amount of dispersant present in the polymerization vessel is at any time from the start of the free radical aqueous emulsion polymerization from 0.5 to 5 % by weight, based on the sum of the masses of starting polymer I and the monomers to be polymerized already added to the polymerization vessel.

**2.** A final aqueous polymer dispersion as claimed in claim 1, obtainable when the at least one aqueous starting polymer dispersion I used contains of aqueous starting polymer dispersions II where $\bar{d}_{w,i}$ ≦ 100 nm only those whose $\bar{d}_{w,i}$ is exclusively within the range from ≧ 20 nm to ≦ 100 nm, preferably within the range from ≧ 30 to ≦ 60 nm.

**3.** A final aqueous polymer dispersion as claimed in claim 1 or 2, obtainable when the at least one aqueous starting polymer dispersion I used contains only such aqueous starting polymer dispersions II that the difference between $\bar{d}_{w,\leq 100}$ and $\bar{d}_{w,i}$, where $\bar{d}_{w,i}$ here is the weight average particle diameter of that aqueous starting polymer dispersion II contained in the aqueous starting polymer dispersion I whose above 100 nm value is closest to 100 nm, is at least 60, preferably 100, nm.

**4.** A final aqueous polymer dispersion as claimed in any of claims 1 to 3, obtainable when the at least one aqueous starting polymer dispersion I used has k values within the range from 0.9 to 1.1 and k' values within the range from 0.75 to 3.

**5.** A final aqueous polymer dispersion as claimed in any of claims 1 to 4, obtainable when the at least one aqueous starting polymer dispersion I used has a $V_{\leq 100}$ from 0.5 to 5 % by volume, based on the sum of all the $V_i$ it contains.

**6.** An aqueous polymer dispersion as claimed in any of claims 1 to 5, whose solids volume concentration is ≧ 50 % by volume and which has the following polymer particle size distribution:

2 - 25 % by weight of polymer ≦ 200 nm
10 - 50 % by weight of polymer ≦ 300 nm
30 - 75 % by weight of polymer ≦ 400 nm
45 - 85 % by weight of polymer ≦ 500 nm
100 % by weight of polymer ≦ 700 nm,

the polymer containing no vinyl or vinylidene halide.

**7.** An aqueous polymer dispersion as claimed in any of claims 1 to 5, whose solids volume concentration is ≧ 50 % by volume and which has the following polymer particle size distribution:

2 - 5 % by weight of polymer ≦ 200 nm
8 - 15 % by weight of polymer ≦ 300 nm
15 - 45 % by weight of polymer ≦ 400 nm
20 - 50 % by weight of polymer ≦ 500 nm
22 - 65 % by weight of polymer ≦ 600 nm
50 - 85 % by weight of polymer ≦ 700 nm
55 - 98 % by weight of polymer ≦ 800 nm
100 % by weight of polymer ≦ 1200 nm,

the polymer containing no vinyl or vinylidene halide.

**8.** A process for preparing an aqueous polymer dispersion as claimed in claim 1, which comprises polymerizing at least one radical polymerizable monomer other than a vinyl or vinylidene halide with the addition of at least one aqueous starting polymer dispersion I in a polymerization vessel by the method of free radical aqueous emulsion polymerization in the presence of dispersants and free radical polymerization initiators with the proviso that

A) the mass of polymer contained in the at least one aqueous starting polymer dispersion I added relative to the total mass comprising the mass of the at least one radical polymerizable monomer and the mass of polymer added in the form of the aqueous starting polymer dispersion I is from 1 to 10 %, preferably from 1 to 5 %,
B) the at least one aqueous starting polymer dispersion I added is constituted like an aqueous polymer dispersion obtained by adding together n aqueous starting polymer dispersions II with the proviso that

a) n is an integer ≧ 2,
b) the weight average particle diameter of the starting polymer particles present in dispersion in the respective aqueous starting polymer dispersions II is for every aqueous starting polymer dispersion II within the range > 0 to 400 nm,
c) the weight average particle diameter of the starting polymer particles of at least one aqueous starting polymer dispersion II is within the range > 0 to 100 nm,
d) the aqueous starting polymer dispersions II have a monomodal distribution of the diameters of the starting polymer particles they contain such that, if $d_X$ defines the diameter below which is the particle diameter of X % by weight of all the starting polymer particles present in the particular aqueous starting dispersion II, the ratio $(d_{90}-d_{10})/d_{50}$ is from 0.1 to 0.6,
e) the relation between the volume $V_i$, obtainable by dividing the mass of the i-th starting polymer II present in the i-th aqueous starting polymer dispersion II by the mass density of the i-th starting polymer II, and the similarly determined volume $V_j$, providing that not only the weight average particle diameter ($\bar{d}_{w,i}$) of the starting polymer particles present in the i-th aqueous starting polymer dispersion II but also $\bar{d}_{w,j}$ is above 100 nm, satisfies equation 1

$$V_i = V_j \cdot k \cdot \left(\frac{\bar{d}_{w,i}}{\bar{d}_{w,j}}\right)^2 \qquad (1)$$

where k is from 1/1.5 to 1.5,
f) the relation between the weight average particle diameter ($\bar{d}_{w,\leq 100}$) of the starting polymer particles determined over the total amount of all the aqueous starting polymer dispersions II that have a weight average particle diameter of the starting polymer particles they contain within the range from > 0 to ≦ 100 nm, and the weight average particle diameter ($\bar{d}_{w,i}$) of the starting polymer particles present in the i-th aqueous starting polymer dispersion II, providing that $\bar{d}_{w,i}$ is > 100 nm, satisfies equation 2

$$V_i = V_{\leq 100} \cdot k' \left(\frac{\bar{d}_{w,i}}{\bar{d}_{w,\leq 100}}\right)^2 \qquad (2)$$

where k' is from 0.5 to 5,

$V_i$ is the mass of the starting polymer present in the i-th aqueous starting polymer dispersion II divided by the mass density of the starting polymer,

$V_{\leqq 100}$ is the mass of the starting polymer present in the total amount of all aqueous starting polymer dispersions II that have a weight average particle diameter of the starting polymer particles they contain within the range from > 0 to ≦ 100 nm, divided by the mass density of the starting polymer,

g) $V_{\leqq 100}$ is from 0.3 to 10 % by volume, based on the sum of all $V_i$, and
h) the difference between the smallest and the largest weight average particle diameter $\bar{d}_{w,i}$ of the aqueous starting polymer dispersions II present in the aqueous starting polymer dispersion I is at least 150 nm,

C) the total amount of the at least one aqueous starting polymer dispersion I to be added is introduced into the polymerization vessel as initial charge prior to the start of the free radical aqueous emulsion polymerization, and
D) the free radical aqueous emulsion polymerization of the at least one radical polymerizable monomer is effected by the stream addition method with the proviso that

- from the start of the free radical aqueous emulsion polymerization the addition of the at least one radical polymerizable monomer to the polymerization vessel is effected in such a way that at any time of the addition the polymerization conversion of the total monomers already added previously to the polymerization vessel is at least 80 mol %, and
- the amount of dispersant present in the polymerization vessel is at any time from the start of the free radical aqueous emulsion polymerization from 0.5 to 5 % by weight, based on the sum of the masses of starting polymer I and the monomers to be polymerized already added to the polymerization vessel.

**9.** The use of aqueous polymer dispersions as claimed in any of claims 1 to 7 as binders and as materials for preparing coatings and adhesive joints.

**Revendications**

**1.** Dispersion aqueuse finale de polymère, qui présente une concentration en volume de solides d'au moins 50% en volume, pouvant être obtenue en ce que l'on polymérise dans un récipient de polymérisation, par le procédé de polymérisation radicalaire en émulsion aqueuse, en présence d'agents de dispersion et d'amorceurs de polymérisation radicalaire, au moins un monomère polymérisable par voir radicalaire, différent des halogénures de vinyle et de vinylidène, avec addition d'au moins une dispersion aqueuse I de polymère de départ, avec les conditions que :

A) la masse de polymère contenue dans la ou les dispersions aqueuses I de polymère de départ, rapportée à la masse totale formée de la masse du ou des monomères polymérisables par voie radicalaire et de la masse de polymère ajoutée sous la forme de la dispersion aqueuse I de polymère de départ, vaut de 1 à 10, et de préférence de 1 à 5%,
B) on fournit la ou les dispersions aqueuses I de polymère de départ ajoutées ainsi qu'une dispersion aqueuse de polymère obtenue par mélange de n dispersions aqueuses II de polymère de départ, le mélange s'effectuant dans des conditions telles que :

a) n est un nombre entier ≧ 2,
b) le diamètre moyen en poids des particules de polymère de départ présentes en répartition dispersée dans chacune des dispersions aqueuses II de polymère de départ est situé dans la plage de > 0 à 400 nm pour chaque dispersion aqueuse II de polymère de départ,
c) le diamètre moyen en poids des particules de polymère de départ d'au moins une dispersion aqueuse II de polymère de départ est dans la plage de > 0 à 100 nm,
d) les dispersions aqueuses II de polymère de départ présentent une distribution monomodale du diamètre des particules de polymère de départ qu'elles contiennent, et qui est telle que si $d_X$ définit le diamètre en dessous duquel est situé le diamètre des particules de X % en poids de toutes les particules de polymère de départ présentes dans la dispersion aqueuse de départ II concernée, le quotient $(d_{90}-d_{10})/d_{50}$ prend une valeur de 0,1 à 0,6,
e) entre le volume $V_i$ que l'on obtient par division de la masse du ième polymère de départ II contenu dans la ième dispersion aqueuse II de polymère de départ par la masse spécifique du ième polymère de départ II et le volume $V_j$ déterminé de manière correspondante, avec la condition préalable que tant le diamètre

moyen en poids ($\bar{d}_{w,i}$) des particules des polymères de départ contenus dans la ième dispersion aqueuse II de polymère de départ que $\bar{d}_{w,j}$ sont situés au-dessus de 100 nm, l'équation 1 :

$$V_i = V_j \cdot k \cdot [(\bar{d}_{w,i})/(\bar{d}_{w,j})]^2 \qquad (1)$$

dans laquelle k = 1/1,5 à 1,5,

est vérifiée,

f) entre le diamètre moyen en poids, calculé sur la quantité totale de toutes les dispersions aqueuses II de polymère de départ qui présentent un diamètre moyen en poids des particules de polymère de départ contenues en elles dans la plage de > 0 à ≤ 100 nm, ($\bar{d}_{w,\leq 100}$), des particules de polymère de départ contenues dans cette quantité totale, et le diamètre moyen en poids ($\bar{d}_{w,i}$) des particules de polymère de départ contenues dans la ième dispersion aqueuse II de polymère de départ, avec la condition préalable que $\bar{d}_{w,i}$ > 100 nm, l'équation 2 :

$$V_i = V_{\leq 100} \cdot k' [(\bar{d}_{w,i})/(\bar{d}_{w,\leq 100})]^2 \qquad (2)$$

dans laquelle

k' = 0,5 à 5,
$V_i$ = la masse du polymère de départ contenu dans la ième dispersion aqueuse II de polymère de départ divisée par sa masse spécifique,
$V_{\leq 100}$ = la masse du polymère de départ contenu dans la quantité totale de toutes les dispersions aqueuses II de polymère de départ qui présentent un diamètre moyen en poids des particules contenues en elles situé dans la plage de > 0 à ≤ 100 nm, divisée par sa masse spécifique,

est vérifiée,

g) $V_{\leq 100}$, calculé sur la somme de tous les $V_i$, vaut de 0,3 à 10% en volume, et

h) la différence entre le plus petit et le plus grand diamètre moyen en poids $\bar{d}_{w,i}$ des particules des dispersions aqueuses II de polymère de départ contenues dans la dispersion aqueuse I de polymère de départ vaut au moins 150 nm,

C) la quantité totale de la ou des dispersions aqueuses I de polymère de départ à ajouter est placée dans le récipient de polymérisation avant le début de la polymérisation radicalaire en émulsion aqueuse, et

D) la polymérisation radicalaire en émulsion aqueuse du ou des monomères polymérisables par voie radicalaire s'effectue par le procédé d'alimentation par versage, avec la condition que

- dès le début de la polymérisation radicalaire en émulsion aqueuse, l'alimentation par versage du ou des monomères polymérisables par voie radicalaire dans le récipient de polymérisation s'effectue de telle sorte qu'à tout instant de l'alimentation par versage, le rendement de polymérisation de la totalité du monomère déjà ajouté précédemment dans le récipient de polymérisation vaut au moins 80% molaires, et
- à chaque instant à partir du début de la polymérisation radicalaire en émulsion aqueuse, la quantité d'agents de dispersion contenue dans le récipient de polymérisation, vaut de 0,5 à 5% en poids, calculés sur base de la somme des masses du polymère de départ I et du monomère à polymériser déjà ajoutées dans le récipient de polymérisation.

**2.** Dispersion aqueuse finale de polymère selon la revendication 1, pouvant être obtenue en ce que l'on utilise en tant que la ou les dispersions aqueuses I de polymère de départ de telles dispersions qui contiennent comme dispersions aqueuses II de polymère de départ présentant un $\bar{d}_{w,i}$ ≤ 100 nm uniquement de telles dispersions dont le $\bar{d}_{w,i}$ est situé exclusivement dans la plage de ≧ 20 nm à ≦ 100 nm, et de préférence dans la plage de ≧ 30 à ≦ 60 nm.

**3.** Dispersion aqueuse finale de polymère selon la revendication 1 ou 2, pouvant être obtenue en ce que l'on utilise en tant que la ou les dispersions aqueuses I de polymère de départ de telles dispersions qui contiennent uniquement des dispersions aqueuses II de polymère de départ telles que la différence entre $\bar{d}_{w,\leq 100}$ et $\bar{d}_{w,i}$, $\bar{d}_{w,i}$ étant ici le diamètre moyen en poids des particules de la dispersion aqueuse II de polymère de départ, contenues dans la dispersion aqueuse I de polymère de départ, dont la valeur située au-dessus de 100 nm est située le plus près de 100 nm, vaut au moins 60, et de préférence 100 nm.

4. Dispersion aqueuse finale de polymère selon les revendications 1 à 3, pouvant être obtenue en ce que l'on utilise en tant que la ou les dispersions aqueuses I de polymère de départ de telles dispersions dont la valeur de k est située dans la plage de 0,9 à 1,1 et dont la valeur de k' est située dans la plage de 0,75 à 3.

5. Dispersion aqueuse finale de polymère selon les revendications 1 à 4, pouvant être obtenue en ce que l'on utilise en tant que la ou les dispersions aqueuses I de polymère de départ de telles dispersions dont le $V_{\leqq 100}$, calculé sur la somme de tous les $V_i$ contenus en elles, vaut de 0,5 à 5% en volume.

6. Dispersion aqueuse de polymère selon les revendications 1 à 5, dont la concentration en volume des solides vaut ≧ 50% en volume, et qui présente la distribution granulométrique des particules de polymère suivante :

   2 à 25% en poids du polymère ≦ 200 nm
   10 à 50% en poids du polymère ≦ 300 nm
   30 à 75% en poids du polymère ≦ 400 nm
   45 à 85% en poids du polymère ≦ 500 nm
   100% en poids du polymère ≦ 700 nm

   tandis que le polymère ne contient pas d'halogénures de vinyle ou de vinylidène.

7. Dispersion aqueuse de polymère selon les revendications 1 à 5, dont la concentration en volume des solides est ≧ 50% en volume, et qui présente la distribution granulométrique des particules de polymère suivante :

   2 à 5% en poids du polymère ≦ 200 nm
   8 à 15% en poids du polymère ≦ 300 nm
   15 à 45% en poids du polymère ≦ 400 nm
   20 à 50% en poids du polymère ≦ 500 nm
   22 à 65% en poids du polymère ≦ 600 nm
   50 à 85% en poids du polymère ≦ 700 nm
   55 à 98% en poids du polymère ≦ 800 nm
   100% en poids du polymère ≦ 1200 nm

   tandis que le polymère ne contient pas d'halogénures de vinyle ou de vinylidène.

8. Procédé pour la préparation d'une dispersion aqueuse de polymère selon la revendication 1, caractérisé en ce que l'on polymérise dans un récipient de polymérisation, par le procédé de polymérisation radicalaire en émulsion aqueuse, en présence d'agents de dispersion et d'amorceurs de polymérisation radicalaire, au moins un monomère polymérisable par voie radicalaire, différent des halogénures de vinyle et de vinylidène, avec addition d'au moins une dispersion aqueuse I de polymère de départ, avec les conditions que :

   A) la masse de polymère contenue dans la ou les dispersions aqueuses I de polymère de départ, rapportée à la masse totale formée de la masse du ou des monomères polymérisables par voie radicalaire et de la masse de polymère ajoutée sous la forme de la dispersion aqueuse I de polymère de départ, vaut de 1 à 10, et de préférence de 1 à 5%,
   B) on fournit la ou les dispersions aqueuses I de polymère de départ ajoutées ainsi qu'une dispersion aqueuse de polymère obtenue par mélange de n dispersions aqueuses II de polymère de départ, le mélange s'effectuant dans des conditions telles que :

      a) n est un nombre entier ≧ 2,
      b) le diamètre moyen en poids des particules de polymère de départ présentes en répartition dispersée dans chacune des dispersions aqueuses II de polymère de départ est situé dans la plage de > 0 à 400 nm pour chaque dispersion aqueuse II de polymère de départ,
      c) le diamètre moyen en poids des particules de polymère de départ d'au moins une dispersion aqueuse II de polymère de départ est dans la plage de > 0 à 100 nm,
      d) les dispersions aqueuses II de polymère de départ présentent une distribution monomodale du diamètre des particules de polymère de départ qu'elles contiennent, et qui est telle que si $d_X$ définit le diamètre en dessous duquel est situé le diamètre des particules de X % en poids de toutes les particules de polymère de départ présentes dans la dispersion aqueuse de départ II concernée, le quotient $(d_{90}-d_{10})/d_{50}$ prend une valeur de 0,1 à 0,6,

e) entre le volume $V_i$ que l'on obtient par division de la masse du ième polymère de départ II contenu dans la ième dispersion aqueuse II de polymère de départ par la masse spécifique du ième polymère de départ II et le volume $V_j$ déterminé de manière correspondante, avec la condition préalable que tant le diamètre moyen en poids ($\bar{d}_{w,i}$) des particules des polymères de départ contenus dans la ième dispersion aqueuse II de polymère de départ que $\bar{d}_{w,j}$ sont situés au-dessus de 100 nm, l'équation 1 :

$$V_i = V_j \cdot k \cdot [(\bar{d}_{w,i})/(\bar{d}_{w,j})]^2 \qquad (1)$$

dans laquelle k = 1/1,5 à 1,5,

est vérifiée,

f) entre le diamètre moyen en poids, calculé sur la quantité totale de toutes les dispersions aqueuses II de polymère de départ qui présentent un diamètre moyen en poids des particules de polymère de départ contenues en elles dans la plage de > 0 à ≦ 100 nm, ($\bar{d}_{w,\leqq 100}$), des particules de polymère de départ contenues dans cette quantité totale, et le diamètre moyen en poids ($\bar{d}_{w,i}$) des particules de polymère de départ contenues dans la ième dispersion aqueuse II de polymère de départ, avec la condition préalable que $\bar{d}_{w,i}$ > 100 nm, l'équation 2 :

$$V_i = V_{\leqq 100} \cdot k' [(\bar{d}_{w,i})/(\bar{d}_{w,\leqq 100})]^2 \qquad (2)$$

dans laquelle

k' = 0,5 à 5,

$V_i$ = la masse du polymère de départ contenu dans la ième dispersion aqueuse II de polymère de départ divisée par sa masse spécifique,

$V_{\leqq 100}$ = la masse du polymère de départ contenu dans la quantité totale de toutes les dispersions aqueuses II de polymère de départ qui présentent un diamètre moyen en poids des particules contenues en elles situé dans la plage de > 0 à ≦ 100 nm, divisée par sa masse spécifique,

est vérifiée,

g) $V_{\leqq 100}$, calculé sur la somme de tous les $V_i$, vaut de 0,3 à 10% en volume, et

h) la différence entre le plus petit et le plus grand diamètre moyen en poids $\bar{d}_{w,i}$ des particules des dispersions aqueuses II de polymère de départ contenues dans la dispersion aqueuse I de polymère de départ vaut au moins 150 nm,

C) la quantité totale de la ou des dispersions aqueuses I de polymère de départ à ajouter est placée dans le récipient de polymérisation avant le début de la polymérisation radicalaire en émulsion aqueuse, et

D) la polymérisation radicalaire en émulsion aqueuse du ou des monomères polymérisables par voie radicalaire s'effectue par le procédé d'alimentation par versage, avec la condition que

- dès le début de la polymérisation radicalaire en émulsion aqueuse, l'alimentation par versage du ou des monomères polymérisables par voie radicalaire dans le récipient de polymérisation s'effectue de telle sorte qu'à tout instant de l'alimentation par versage, le rendement de polymérisation de la totalité du monomère déjà ajouté précédemment dans le récipient de polymérisation vaut au moins 80% molaires, et
- à chaque instant à partir du début de la polymérisation radicalaire en émulsion aqueuse, la quantité d'agents de dispersion contenus dans le récipient de polymérisation, vaut de 0,5 à 5% en poids, calculés sur base de la somme des masses du polymère de départ I et du monomère à polymériser déjà ajoutées dans le récipient de polymérisation.

**9.** Utilisation de dispersions aqueuses de polymère selon les revendications 1 à 7 comme liants et comme masses pour la préparation d'enduits et de colles.